Europäisches Patentamt

European Patent Office

Office européen des brevets

(11) Publication number: **0 152 642**
**A1**

## (12) EUROPEAN PATENT APPLICATION

(21) Application number: **84201560.4**

(22) Date of filing: **31.10.84**

(51) Int. Cl.⁴: **G 06 F 15/68**

(30) Priority: **02.11.83 GB 8329240**

(43) Date of publication of application: **28.08.85**
**Bulletin 85/35**

(84) Designated Contracting States: **DE FR GB NL**

(71) Applicant: **N.V. Philips' Gloeilampenfabrieken,**
**Groenewoudseweg 1, NL-5621 BA Eindhoven (NL)**

(72) Inventor: **Clarke, Owen Frederick, c/o INT.**
**OCTROOIBUREAU B.V. Prof. Holstlaan 6, NL-5656 AA**
**Eindhoven (NL)**
Inventor: **Endlich, Bernhard, c/o INT. OCTROOIBUREAU**
**B.V. Prof. Holstlaan 6, NL-5656 AA Eindhoven (NL)**
Inventor: **Cowen, Arnold Richard, c/o INT.**
**OCTROOIBUREAU B.V. Prof. Holstlaan 6, NL-5656 AA**
**Eindhoven (NL)**
Inventor: **Haywood, John Michael, c/o INT.**
**OCTROOIBUREAU B.V. Prof. Holstlaan 6, NL-5656 AA**
**Eindhoven (NL)**

(74) Representative: **Scheele, Edial François et al,**
**INTERNATIONAAL OCTROOIBUREAU B.V. Prof.**
**Holstlaan 6, NL-5656 AA Eindhoven (NL)**

(54) X-ray apparatus using dummy image subtraction.

㉗ In order to remove apparatus-induced artefacts and the like from the ultimate image, a subtraction operation is performed between an image of an object to be examined and a dummy image in an X-ray apparatus. Both images are formed in similar apparatus conditions. A dummy object to be used for the dummy image can be adapted to the nature and the degree of interaction between the imaging X-ray beam and the object to be examined. The subtraction operation is preferably performed on digitized image formation.

EP 0 152 642 A1

X-ray apparatus using dummy image subtraction.

The invention relates to an X-ray apparatus comprising an X-ray source and an X-ray dete ctor for generating and detecting radiation images produced by interaction between an X-ray beam and an object to be examined, and also comprising an imaging device for the formation of images to be displayed. The invention also relates to a method of performing X-ray examinations by means of such an apparatus.

An X-ray apparatus of the kind seth forth is known from an article entitled "Digital Radiography" in Computer Tomographie 1, Vol. 3, March 1983, pp 1-10. This articles describes various X-ray examination methods utilizing digital image processing. A very useful method is described on the pages 7 and 8 of said article. This method utilizes an X-ray apparatus comprising an X-ray image intensifier/television chain as a detection system which is suitable for digital image processing. US.PS. 4,204,225 discloses an X-ray apparatus comprising such a detection system and a digital image subtraction device for images of the same object or part of the object but recorded before and after injection of a contrast medium. A striking aspect thereof is that in comparison with other imaging methods substantially artefact-free images are obtained. The invention is based on the recognition of the fact that the majority of artefacts are eliminated by the subtraction operation, because all apparatus-induced artefacts which are equally present in both images are eliminated from the ultimate image.

It is the object of the invention to achieve this advantage also for other X-ray apparatus and examination methods; to this end, an X-ray apparatus of the kind set forth in accordance with the invention is characterized in that for the reduction of apparatus-induced artefacts in the images to be displayed it forms a dummy image which is to be used for subtraction at a later stage and which contains the same apparatus-induced artefacts as an object image formed with at least substantially the same imaging parameters.

Because an X-ray apparatus in accordance with the invention utilizes subtraction images for the ultimate image formation, all artefacts introduced by the apparatus are eliminated from the ultimate image.

Comparatively difficult problems concerning the superposition of a dummy image and an image of the object to be examined can be avoided by constructing a dummy object so that it exhibits an at least substantially homogeneous interaction at least for a relevant section of the X-ray beam. It may be advantageous to make the interaction between the X-ray beam and the dummy object approximately equal (on average) to the interaction between the X-ray beam and the object to be examined. The subtraction is optimized by utilizing image digitization and digital subtraction. The digital image processing is then preferably logarithmically performed. For example, for diagnostic imaging in a variety of X-ray apparatus artefact-free images can thus be obtained by means of the device disclosed in US.PS. 4,204,225 without image subtraction in the sense as described therein. Use if preferably made of an X-ray image intensifier tube as described in US.PS. 4,213,055 and a television camera tube as described in US.PS. 3,831,058.

For applications requiring exact positioning or repositioning of the dummy object or the object to be examined, use can be made of the apparatus described in GB 2,098,440 (PHN 10043). The dummy image can be adapted to the nature of the X-rays, the shape and the properties of the detector, the object or part of the object to be examined, the geometry of the beam path, etc. For examinations involving X-rays of different hardness (so-called dual energy examinations), use can be made of an X-ray generator with a number of fixed excitation pulses for the X-ray tube which can be preset as regards voltage and pulse duration. An adapted dummy object can be used for each of the wavelength ranges of the X-ray beam. For automatic exposure control, use can be made of a photo-timer, for example as described in US.PS. 3,546,461 in order to correlate the exposure for a dummy image and an object image.

For the recording of image information to be processed at a later stage, a digital magnetic recording device may be included. One or more dummy images can be stored in such a recording device, also for a prolonged period of time and in such a manner that they can be fetched time and again. Such dummy images require adaptation only when a different type of examination is to be performed or when the imaging quality of the apparatus has changed. Moreover, in the latter case information as regards the nature and the extent of such a change can be derived by subtraction of an earlier and a later dummy image. This information will usually suffice for locating and eliminating such changes.

Dummy images of this kind can also be used for testing the quality of the X-ray apparatus; for example, they can be sent to the manufacturer of the apparatus for comparison.

The invention involves the formation of an object image as well as a dummy image, all circumstances remaining the same as well as possible for both image formations; the dummy image is adapted to the degree and nature of the interaction between the X-ray beam and the object to be examined. The two images thus formed are subsequently subjected to a subtraction operation. Subtraction is preferably digitized. For brief or prolonged image storage use can be made of digital magnetic image recording.

Some preferred embodiments in accordance with the invention will be described in detail hereinafter with reference to the accompanying diagrammatic drawing.

An X-ray apparatus as shown in the sole Figure of the drawing comprises an X-ray tube 1 which comprises an anode 2, a cathode 4 and an exit window 6 for an X-ray beam 8 for irradiating an object 10 which is arranged on an object table 12. Underneath the object table (viewed in the Figure) and in the X-ray beam 14 carrying image information there is arranged an X-ray image intensifier tube 15 which comprises an entrance screen 16, an exit screen 18 and an electronoptical system 20 which images an electron beam 22 on the exit screen, said electron beam being released from a photocathode of the entrance screen by the X-ray beam 14. Using an optical fibre system or, as in this case a lens system 24, the exit screen 18 is optically coupled to an entrance screen 26 of a television camera tube 25. In the television camera tube an image which is projected onto its entrance screen 26 by a light beam 27 is scanned by an electron beam 28 in order to be converted into a video signal. Via a preamplifier 30, the video signal is applied to a first monitor 32 and an A/D converter 34 in which analog video signals are converted into digitized image signals which can be applied for further processing to a digital image recording device 36 which comprises a digital image processing unit 38, a first image storage device 40, for example a magnetic disc, and a second memory 42, for example a digital optical memory in which images can be stored for prolonged periods of time. From the memory/ arithmetic unit a resultant digital image can be displayed on a television monitor 46 via a D/A converter 46 or be recorded as a hardcopy via a hardcopy unit 48. A central control unit 50 is provided for control and, if necessary, synchronization of the television camera tube, the X-ray tube and the position of the object table and hence of the object.

For the execution of the method in accordance with the invention, being parallel to the method disclosed in US.PS. 4,204,226 to a high degree, a dummy image is made, for example of a dummy object consisting of a plate of a material whose absorption is approximately equal and equivalent to the mean absorption of an object to be examined. To this end, use can be made of a material having an absorption coefficient which is at least substantially equal to that of the object to be examined, so in the case of diagnostic examination a material whose absorption coefficient corresponds to that of biological tissues or bones etc. The degree of absorption can be adapted by selection of the thickness of the dummy object, viewed in the direction of the radiation. For the geometry and the radiation properties of the dummy object it is also possible to take into account the radiation quality of the X-rays to be used, for equal hardening of the radiation etc., the geometry of the radiation beam, so the mutual positions of the radiation object point, the object and the detection entrance screen, notably for uniformity in imaging and scattered radiation, beam stopping, and the cross-section of the X-ray beam to be used, as well as (as has already been stated) the geometry and the nature of the object or series of objects to be examined.

The circumstances being the same as well as possible, at least for the apparatus as such, a dummy image is formed as well as an object image, after which a subtraction image is formed using the method described in US.OS. 4,204,226. However, this subtraction image is now an object image wherefrom all apparatus-induced artefacts have been removed. If desired, the dummy image and the object image may be stored for a short or long period of time in a (in this case) digital memory. Though the digital subtraction offers many advantages, the invention need not be restricted thereto. The advantages of the invention can also be achieved by means of analog, for example video signal subtraction and optical subtraction of, for example, cinematographic images. The superposition problems encountered in customary non-digital image subtraction are here irrelevant thanks to the homogenous transmission of the dummy object.

For other examinations a new dummy image can be formed as de-

0152642

sired, said new dummy image taking the place of the previously formed dummy image or being stored in a memory. It is also possible to deliver with an X-ray apparatus a set of identified dummy images which can be fetched, for example, from a digital or analog memory.

By subtraction of an earlier and a later dummy image of, for example the same dummy object, changes in the imaging quality of the apparatus in the course of its service life can be demonstrated and usually their nature and cause can be identified. After such a test, either the later dummy image can be used or the apparatus can be repaired.

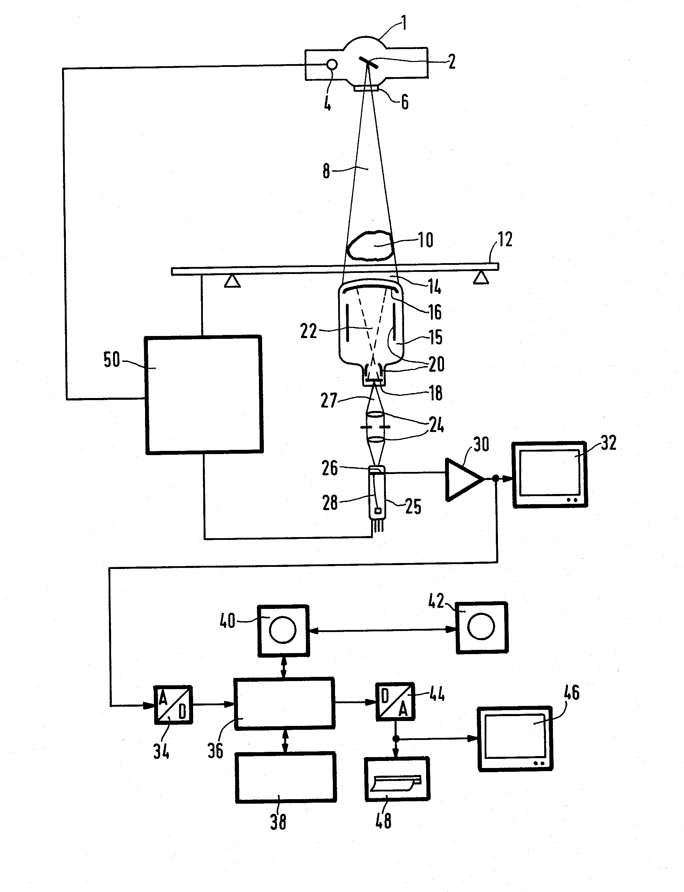

A further type of X-ray apparatus in which the invention can be successfully used is the type described with reference to Figure 16 of said article "Digital Radiography". Therein notably any inhomogenities of the luminescent screen are completely removed from the ultimate diagnostic image by subtraction of a dummy image. Merely an image subtraction unit comprising a memory need then be added to the digital image processing device included in the described apparatus.

Also for dual energy X-ray examination methods improved ultimate images can be obtained by means of the invention. It is notably advantageous to form an adapted dummy image for each of the X-ray wavelength ranges to be used. Deviations in the imaging properties of the apparatus due to the difference in hardness of the X-rays are thus eliminated from the ultimate images. The only difference then remaining between two ultimate images recorded with X-rays of different hardness is then the interaction differences between the X-ray beam and the object to be examined, so that a better diagnosis is possible.

Because the diagnostic ultimate images obtained by means of the method in accordance with the invention are substantially free from the image artefacts customarily occuring, a smaller radiation dose will usually suffice for the formation of the object image, so that a patient to be examined will be exposed to a smaller radiation load.

1.      An X-ray apparatus comprising an X-ray source and an X-ray detector for generating and detecting radiation images produced by interaction between an X-ray beam and an object to be examined, and also comprising an imaging device for the formation of images to be displayed, characterized in that for the reduction of apparatus-induced artefacts in the images to be dispalyed it forms a dummy image which is to be used for subtraction at a later stage and which contains the same apparatus-induced artefacts as an object image formed by, at least substantially, the same imaging parameters.

2.      An X-ray apparatus as claimed in Claim 1, characterized in that the imaging device comprises an analog-to-digital converter and means for digital image subtraction.

3.      An X-ray apparatus as claimed in Claim 1 or 2, characterized in that an image intensifier/television chain is included for imaging.

4.      An X-ray apparatus as claimed in Claim 3, characterized in that an X-ray image intensifier tube of the image intensifier/television chain comprises an entrance window having a cross-section of at least approximately 35 cm.

5.      An X-ray apparatus as claimed in Claim 3 or 4, characterized in that the image intensifier/television chain comprises a high-resolution television camera tube.

6.      An X-ray apparatus as claimed in Claim 3, 4 or 5, characterized in that a television camera tube of the image intensifier/television chain is suitable for the formation of integrated image information.

7.      An X-ray apparatus as claimed in any of the preceding Claims, characterized in that a dummy object for the formation of a dummy image is adapted to the degree of interaction between the X-ray beam and the object.

8.      An X-ray apparatus as claimed in any of the preceding Claims, characterized in that an object carrier allows for a suitable exchange of object and dummy object.

9.      An X-ray apparatus as claimed in any of the preceding Claims, characterized in that an X-ray generator included therein is suitable to generate excitation pulses for the X-ray tube with a number of preset-table peak voltages.

10.      An X-ray apparatus as claimed in any of the preceding Claims, characterized in that the positioning of the dummy object can be adapted to the geometry and the nature of the X-ray beam irradiating the object.

11.      An X-ray apparatus as claimed in any of the preceding Claims, characterized in that there is included an off-line image recording element for the storage of a dummy image, so that it can be read out.

12.      An X-ray apparatus as claimed in any of the preceding Claims, characterized in that an image recording device included therein is suitable for the storage of several identified dummy images.

13.      An X-ray apparatus as claimed in any of the preceding Claims, characterized in that the X-ray source comprises beam stops and radiation filters adapted to the measurement technique involving subtraction images.

14.      An X-ray apparatus as claimed in any of the preceding Claims, characterized in that a photodetector is arranged in the beam path for automatic exposure control.

15.      An X-ray apparatus as claimed in any of the preceding Claims, characterized in that it is suitable for dual energy examiantions, a dummy image being available for each of the radiation energies.

16.      A method for forming an image of the interaction between an X-ray beam and an object to be examined, characterized in that in addition to the formation of an image of the object there is formed a dummy image by means of an at least substantially equivalent X-ray beam and in corresponding imaging circumstances, after which the two images are subtracted.

17.      A method as claimed in Claim 16, characterized in that each of the images is first digitized, after which the digital images are subjected to a logarithmic subtraction operation.

18.      A method as claimed in Claim 16 or 17, characterized in that a dummy image is stored in a digital image recording unit for later use as a subtraction image.

19.      A method as claimed in Claim 16, 17 or 18, characterized in that a single dummy image is formed per series of exposures.

20.      A method as claimed in any of the Claims 16 to 19, characterized in that the radiation parameters are first adjusted for an object to be examined, after which a dummy image is formed of a dummy object using the same parameters, followed by the formation of an image of the object and subtraction of the images.

21. An X-ray apparatus substantially as herein described with reference to the accompanying drawing.

22. A method for forming an image of the interaction between an X-ray beam and an object to be examined, substantially as herein described with reference to the accompanying drawings.

----------

0152642

PHQ 83—022

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | FR-A-2 514 222 (SIEMENS) <br> * Page 7, line 4 - page 8, line 17; figure 2 * | 1-6 | G 06 F 15/68 |
| | ----- | | |

TECHNICAL FIELDS SEARCHED (Int. Cl.4)

G 06 F 15/68

The present search report has been drawn up for all claims

| Place of search | Date of completion of the search | Examiner |
|---|---|---|
| THE HAGUE | 05-06-1985 | BURGAUD C. |